# EUROPÄISCHE PATENTSCHRIFT

(11) **EP 3 629 067 B1**
(45) Veröffentlichungstag und Bekanntmachung des Hinweises auf die Patenterteilung: **15.03.2023**
(21) Anmeldenummer: 18197026.0
(22) Anmeldetag: 26.09.2018
(51) Int. Cl.: G01V 8/20, G01S 17/02, G01V 8/26, G01S 17/04, G01S 17/87, G01S 7/48, G02B 26/10, G01S 7/481

(54) **LICHTGITTER MIT TOF-SENSOR**
LIGHT GRID WITH TOF SENSOR
GRILLE LUMINEUSE À CAPTEUR TOF

(43) Veröffentlichungstag der Anmeldung: 01.04.2020
(73) Patentinhaber: Cedes AG, 7302 Landquart (CH)
(72) Erfinder: FREEDMAN, Steven, Minneapolis, MN 55417 (US); O'LAUGHLIN, James, Belle Plaine, MN 56011 (US); TRIET, Philipp, 7310 Bad Ragaz (CH); GIGER, Jan, 7233 Jenaz (CH)
(74) Vertreter: Otten, Roth, Dobler & Partner mbB Patentanwälte

(56) Entgegenhaltungen:
- WO-A1-2018/064745
- US-A- 4 967 083
- US-A1- 2007 181 786
- US-A1- 2011 271 602
- US-A1- 2017 052 278

## Beschreibung

Die Erfindung betrifft eine Sensorvorrichtung zur Absicherung und/oder Steuerung eines Durchgangs, insbesondere einer Aufzugstüre, einer automatischen Türe oder eines Tors.

Aus dem Stand der Technik, zum Beispiel der US 2017/052278 A1, sind Sensorvorrichtungen bekannt, die einen weiteren Sensor integrieren, mit dem der Raum vor der Überwachungsebene des Lichtgitters überwacht wird.

Es ist Aufgabe der Erfindung, eine verbesserte Sensorvorrichtung der genannten Art bereit zu stellen.

Diese Aufgabe wird, ausgehend von einer Sensorvorrichtung der oben genannten Art, durch eine Sensorvorrichtung nach Anspruch 1 und einen Durchgang nach Anspruch 14 gelöst. Vorteilhafte Ausgestaltungen sind in den weiteren abhängigen Ansprüchen angegeben.

Der erfindungsgemäße Sensorvorrichtung ist zur Absicherung und/oder Steuerung eines Durchgangs insbesondere einer Aufzugstüre, einer automatischen Türe oder eines automatischen Tors mit einer Durchgangsöffnung ausgebildet und umfasst ein Lichtgitter, einen Sensor und einen Träger. Das Lichtgitter zur Detektion eines Objekts in seiner Überwachungsebene umfasst eine Senderleiste mit wenigstens zwei Senderelementen zum Aussenden von Strahlen in eine gemeinsame Ebene, sodass diese Ebene die Überwachungsebene ausbildet und eine Empfängerleiste mit wenigstens zwei Empfängerelementen zum Empfang von Strahlen der Senderleiste. Der Sensor zur Detektion eines Objekts in einem Überwachungsraum ausserhalb der Überwachungsebene ist ein Distanzsensor, der zur Detektion der Entfernung zum Objekt ausgebildet ist. Am Träger sind die Senderleiste oder die Empfängerleiste als ausgewählte Leiste und der Distanzsensor gemeinsam befestigt. Die Sensorvorrichtung ist dazu ausgebildet, ein Signal auszugeben, wenn ein Objekt eine bestimmte Entfernung zum Distanzsensor oder eine bestimmte Linie oder Fläche vor dem Distanzsensor innerhalb des Überwachungsraumes erreicht oder unterschreitet.

Ausserhalb der Überwachungsebene bedeutet hier mindestens teilweise ausserhalb oder vollständig ausserhalb.

Der Überwachungsraum ist ein Raumbereich der als Raumbereich oder im Wesentlichen als eine Ebene oder als ein Strahl ausgeprägt sein kann. Ein Stahl kann auch als Stahlkegel ausgeprägt sein.

Dies kann den Vorteil ausbilden, dass die Detektion zuverlässiger ist. Insbesondere kann die Sensorvorrichtung den Vorteil ausbilden, dass die Detektion in Bezug auf die Lage des Objektes vor dem Durchgang zuverlässiger ist. Insbesondere können Fehldetektionen aufgrund weit entfernter Objekte vermieden werden. Insbesondere können Fehldetektionen aufgrund unterschiedlicher Reflexivität der Objekte vermieden werden.

Vorzugsweise ist der Distanzsensor an einem Ende der ausgewählten Lichtleiste oder Trägers angeordnet, um bei senkrechter Montage der Lichtleiste am Durchgang unten zu sein. Dies kann den Vorteil ausbilden, dass ein Objekt vor dem Durchgang zuverlässig detektiert wird, unabhängig wie hoch es ist.

Vorzugsweise ist der Träger und/oder die ausgewählte Leiste mit dem Distanzsensor zur Montage auf einer Schiebetüre insbesondere im Bereich der Vorderkante der Schiebetüre, insbesondere einer Aufzugstüre vorgesehen. Dies kann den Vorteil ausbilden, dass der Distanzsensor den gefährlichen Bereich um die Vorderkante der Türe optimal überwacht und so die Sicherheit erhöht.

Vorzugsweise ist der Überwachungsraum des Distanzsensors als zweite Überwachungsebene ausgebildet welche insbesondere senkrecht zur Überwachungsebene des Lichtgitters verläuft, um bei senkrechtem Einbau des Lichtgitters insbesondere parallel zum Boden zu verlaufen. Dies kann den Vorteil ausbilden, dass der Raum vor dem Durchgang mit minimalem Detektionseinsatz maximal abgedeckt überwacht wird.

Vorzugsweise ist der Überwachungsraum des Distanzsensors als Strahl entlang einer Stahlachse ausgebildet welcher von der Überwachungsebene des Lichtgitters weg geneigt ist. Dies kann den Vorteil ausbilden, dass ein Objekt im Bereich der Mitte vor dem Durchgang mit minimalem Aufwand noch zuverlässig detektiert wird.

Vorzugsweise umfasst der Distanzsensor einen Sender, der zum Aussenden des Strahls entlang einer Stahlachse ausgebildet ist. Dies kann den Vorteil ausbilden, dass der Distanzsensor nicht auf externe Beleuchtung angewiesen ist.

Vorzugsweise weist der Strahl des Distanzsensors einen Öffnungswinkel von kleiner 40°, insbesondere kleiner 20°, insbesondere kleiner 12°, insbesondere kleiner 8°, insbesondere kleiner 4° um die Stahlachse auf. Dies kann den Vorteil ausbilden, dass die benötigte Energie minimiert werden kann um die nötige Energiedichte zur Detektion zu gewährleisten.

Vorzugsweise ist die Strahlachse des Distanzsensors im spitzen Winkel gegenüber der Überwachungsebene um die Längsachse der ausgewählten Leiste gedreht angeordnet, wobei der Winkel insbesondere kleiner 90° ist, insbesondere zwischen 20° und 70° ist, insbesondere zwischen 40° und 60° ist, insbesondere etwa 50° ist, um insbesondere in montiertem Zustand an der Durchgangsöffnung in den Bereich vor oder nach der Durchgangsöffnung zu zeigen. Dies kann den Vorteil ausbilden, dass der Raum vor dem Durchgang mit minimalem Detektionsbereich optimal überwacht wird.

Vorzugsweise ist die Strahlachse des Distanzsensors im spitzen Winkel gegenüber der lotrechen Ebene zur Längsachse der ausgewählten Leiste angeordnet welcher insbesondere kleiner 90° ist, insbesondere kleiner 45° ist, insbesondere kleiner 10° ist, insbesondere kleiner 5° ist oder insbesondere dem halben Öffnungswinkel des Strahls entspricht, um insbesondere in senkrecht montiertem Zustand der Sensorvorrichtung nach oben zu zeigen. Dies kann den Vorteil ausbilden, dass Reflexionen des konischen Strahls am Boden minimiert oder vermieden werden. Dies kann die Detektionsqualität erhöhen.

Vorzugsweise sind die Senderleiste und die Empfängerleiste des Lichtgitters zur parallelen Anordnung und/oder zur senkrechten Montage an den gegenüberliegenden Seiten des Durchgangs ausgebildet und/oder vorgesehen. Vorzugsweise ist die Senderleiste zum Aussenden von parallelen Strahlen senkrecht zur Senderleiste ausgebildet.

Vorzugsweise ist der Distanzsensor ein 3D-Sensor. Vorzugsweise ist der Distanzsensor ein optischer TOF (Time of Flight) Sensor. Insbesondere umfasst der Distanzsensor einen Sender zum Aussenden von moduliertem IR-Strahlung in den Überwachungsraum und einen Empfänger zum Empfang von am Objekt reflektierter Strahlung des Senders. Insbesondere ermittelt der Distanzsensor die Entfernung zu einem Objekt durch Ermittlung der Flugzeit oder der Phasenverschiebung der vom Objekt reflektierten Strahlung des Senders.

Dies kann den Vorteil ausbilden, preiswert und gesundheitsverträglich zu sein.

Vorzugsweise weist der Träger eine Montageeinheit zur Befestigung des Distanzsensors am Träger auf. Vorzugsweise weist die Montageeinheit ein Trennelement zur optischen Trennung von Sender und Empfänger des Distanzsensors auf. Dies kann den Vorteil ausbilden, dass der Distanzsensor einfach montiert werden kann und dass Streulicht vom Sender in den Empfänger vermieden wird und so die Detektionsqualität erhöht wird.

Vorzugsweise weist der Träger wenigstens eine Abdeckeinheit auf zur Abdeckung der Lichtleisten auf dem Träger und/oder zur Abdeckung des Montageelements im Bereich des Senders und/oder zur Abdeckung des Montageelements im Bereich des Empfängers. Vorzugsweise ist die Abdeckeinheit für die verwendete Strahlung des Distanzsensors transparent. Dies kann den Vorteil ausbilden, dass das Lichtgitter und oder der Distanzsensor vor Verschmutzung geschützt ist.

Vorzugsweise weist der Träger wenigstens ein Befestigungselement an Träger, Montageeinheit und Abdeckeinheiten auf zur einrastbaren und/oder formschlüssigen und/oder verschieblichen Befestigung von Montageelement und Abdeckelementen am Träger. Dies kann den Vorteil ausbilden, dass die Einheiten einfach zusammengebaut werden können.

Der erfindungsgemässe Durchgang ist ein Durchgang mit einer erfindungsgemässen Sensorvorrichtung wie oben genannt. Vorzugsweise ist der Durchgang eine Schiebetüre oder ein Roll- oder Sektionaltor oder eine Aufzugstüre.

Dies kann die oben genannten Vorteile ausbilden.

Weitere Merkmale der Erfindung sind in den Zeichnungen angegeben.

Die jeweils genannten Vorteile können sich auch für Merkmalskombinationen realisieren in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: Aufzugskabine mit Aufzugstüre in 3D-Ansicht
- Fig. 2: Detail aus Fig. 1 an der rechten unteren Aufzugstüre
- Fig. 3: Fig. 2 als Schnitt
- Fig. 4: Fig. 1 als Schnitt
- Fig. 5: Fig. 1 als Schnitt mit 2ter Überwachungsfläche des Distanzsensors
- Fig. 6: Fig. 2 als Explosionszeichnung

### Detaillierte Beschreibung der Zeichnungen:

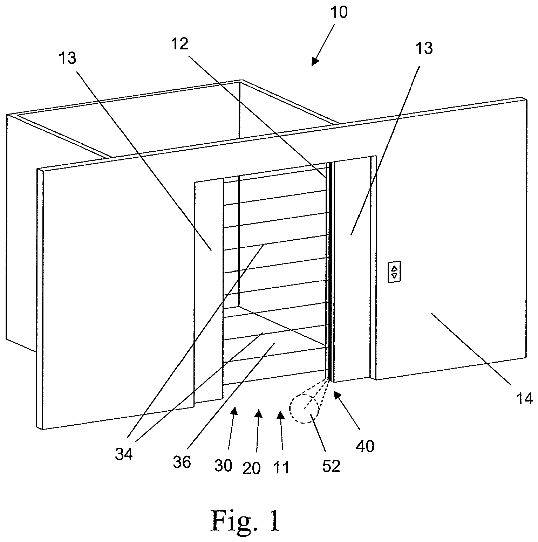

Fig. 1 zeigt eine Aufzugskabine mit Aufzugstüre in 3D-Ansicht. Hinter der Gebäudewand 14 mit dem Durchgang 11 ist die Aufzugskabine 10. Der Durchgang ist durch äussere Gebäudetüren 13 und innere Kabinentüren 12 verschliessbar. Die Türen sind Schiebetüren. An den inneren Kabinentüren sind Senderleiste und Empfängerleiste eines Lichtgitters 30 montiert die die Strahlen 34 erzeugen, die eine Überwachungsebene 36 zwischen den gegenüberliegenden Türen ausbilden. Am unteren Ende der Senderleiste ist ein Distanzsensor 40 angebracht, der einen Strahl 52 zur Überwachung des Vorraumes vor dem Durchgang 11 erzeugt. Der Strahl 52 ist in den Raum vor dem Durchgang gerichtet. Das Lichtgitter 30 und der Distanzsensor 40 bilden die Sensorvorrichtung 20.

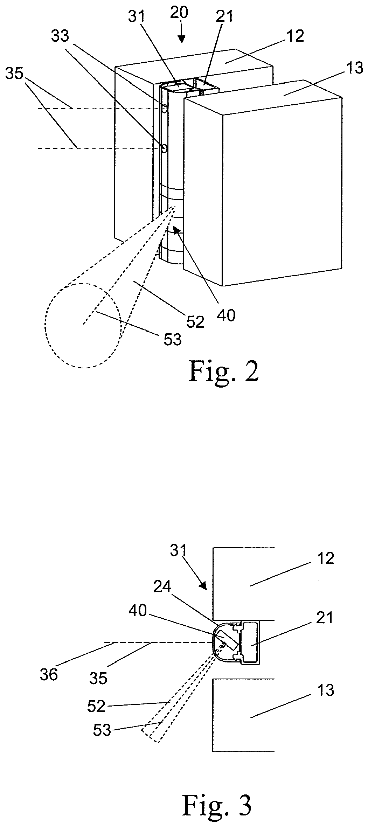

Fig. 2 zeigt ein Detail aus Fig. 1 an der rechten unteren Aufzugstüre. Die Senderleiste 31 des Lichtgitters ist auf dem Träger 21 und mit diesem an der rechten inneren Aufzugstüre 12 an Seite und bündig zur vorderen Kante befestigt. Die Senderleiste 31 ist von der rechten äusseren Gebäudetüre 13 teilweise verdeckt. Die Senderleiste 31 weist Senderelemente 33 auf, die parallele Strahlen 35 aussenden. Im unteren Bereich der Senderleiste 31 ist der Distanzsensor 40 ebenfalls auf dem Träger 21 befestigt und sendet einen Strahl 52 um die Strahlachse 53 aus welcher den Überwachungsraum des Distanzsensors bildet.

Fig. 3 zeigt Fig. 2 als waagrechten Schnitt. Die Strahlen 35 der Senderleiste des Lichtgitters definieren die Überwachungsebene 36 des Lichtgitters. Der Distanzsensor 40 sendet seinen Strahl 53 mit der Strahlachse 53 im spitzen Winkel gegenüber der Überwachungsebene 36 des Lichtgitters aus.

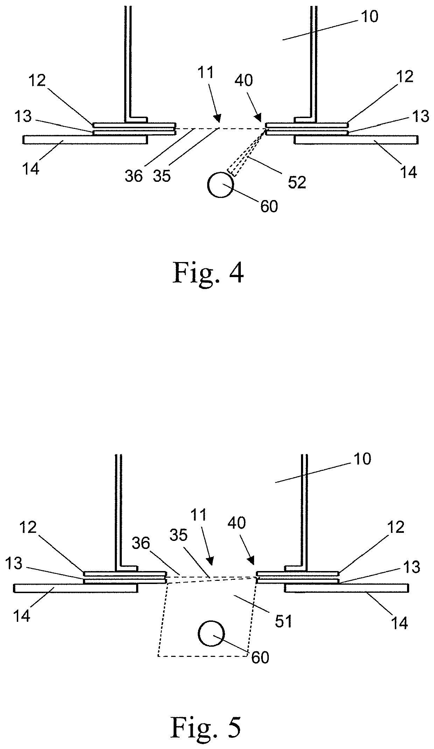

Fig. 4 zeigt Fig. 1 als Schnitt. Der Distanzsensor 40 sendet einen Strahl 52 zur Überwachung in den Raum vor dem Durchgang. Ein Objekt 60, etwa eine Person vor dem Durchgang wird vom Strahl erfasst und vom Distanzsensor detektiert. Das Objekt wird somit detektiert bevor es die Überwachungsebene 36 der Lichtstahlen 35 des Lichtgitters erreicht. Der Distanzsensor ist so eingestellt, dass er nur dann ein Signal ausgibt, wenn Objekte in Richtung seiner Strahlachse eine bestimmte Entfernung zum Distanzsensor und damit zur Vorderkante der Aufzugstüre oder der Überwachungsebene des Lichtgitters oder der Türebene unterschreiten.

Fig. 5 zeigt Fig. 1 als Schnitt mit 2ter Überwachungsfläche des Distanzsensors. Der Distanzsensor erzeugt hier keinen Strahl, sondern leuchtet eine Fläche, die 2te Überwachungsebene, parallel zum Boden aus um diese 2te Überwachungsebene auf das Eindringen eines Objekts 60 hin zu überwachen. Die 2te Überwachungsebene hat die Form eines Vierecks oder Trapez. Die 2te Überwachungsebene kann etwa durch eine Vielzahl von fächerartigen Strahlen des Distanzsensors gebildet sein. Die 2te Überwachungsebene ist begrenzt.

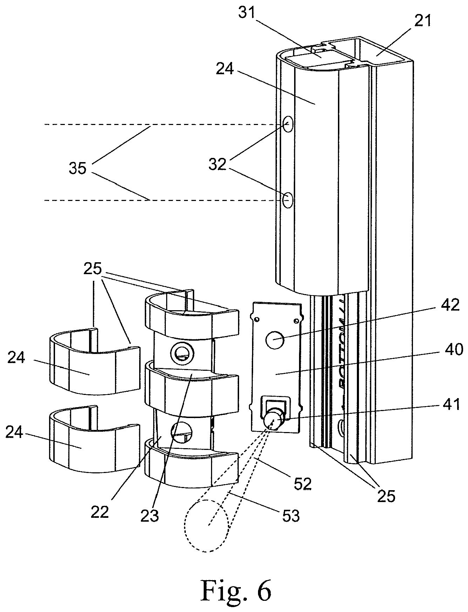

Fig. 6 zeigt Fig. 2 als Explosionszeichnung. Auf dem Träger 21 ist die Senderleiste 31 mit ihren Senderelementen 32 montiert, welche die IR-Lichtstrahlen 35 des Lichtgitters aussenden. Die Senderleiste 31 ist von einer Abdeckeinheit 25 umgeben welche ebenfalls am Träger 21 befestigt ist. Die Abdeckeinheit besteht aus IR-transparentem Material, sodass die IR-Lichtstrahlen 35 diese durchdringen. Am unteren Ende des Trägers 21 unterhalb der Senderleiste 31 weist der Träger 21 Befestigungselemente 25 auf, um die Montageeinheit 22 mit gegengleichen Befestigungselementen 25 klickbar aufzunehmen. Die Montageeinheit 22 ist dazu ausgebildet, den Distanzsensor 40 formschlüssig aufzunehmen und weist ein Trennelement 23 auf welches Sender 41 und Empfänger 42 des eingefügten Distanzsensors optisch trennt. Über der Montageeinheit 22 werden durch das Trennelement 23 getrennt eine Abdeckeinheit 24 jeweils über den Bereich des Senders und des Empfängers mit gegengleichen Befestigungselementen 25 am Träger 21 befestigt, sodass auch innerhalb der Abdeckung keine Streustrahlung des Senders zum Empfänger gelangen kann.

Die Figuren 1, 2, 3, 4 und 6 zeigen das identisch gleiche Ausführungsbeispiel. Figur 5 ist ebenfalls identisch bis auf den Überwachungsraum, welcher hier durch eine Fläche statt durch einen Strahl gebildet ist.

### Bezugszeichenliste:

- 10: Aufzugskabine
- 11: Durchgang
- 12: innere Kabinentüre
- 13: äussere Gebäudetüre
- 14: Gebäudewand

- 20: Sensorvorrichtung
- 21: Träger
- 22: Montageeinheit
- 23: Trennelement
- 24: Abdeckeinheit
- 25: Befestigungselement

- 30: Lichtgitter
- 31: Senderleiste
- 32: Senderelement
- 33: Empfängerleiste
- 34: Empfängerelement
- 35: Lichtstrahl
- 36: Überwachungsebene

- 40: Distanzsensor
- 41: Sender
- 42: Empfänger

- 50: Überwachungsraum
- 51: 2te Überwachungsebene
- 52: Strahl
- 53: Strahlachse

- 60: Objekt

## Patentansprüche

1. Sensorvorrichtung (20) zur Absicherung und/oder Steuerung eines Durchgangs (11) mit einer Durchgangsöffnung,
- mit einem Lichtgitter (30) zur Detektion eines Objekts (60) in einer Überwachungsebene (36), mit einer Senderleiste (31) mit Senderelementen (32) zum Aussenden von Strahlen (52) in eine gemeinsame Ebene, sodass diese Ebene die Überwachungsebene (36) ausbildet, mit einer Empfängerleiste (33) mit Empfängerelementen (34) zum Empfang von Strahlen (52) der Senderleiste (31),
- und mit einem Sensor zur Detektion eines Objekts (60) in einem Überwachungsraum (50) ausserhalb der Überwachungsebene (36)
**dadurch gekennzeichnet, dass**
- ein Träger (21) vorhanden ist, an dem die Senderleiste (31) oder Empfängerleiste (33) als ausgewählte Leiste und der Sensor gemeinsam befestigt sind und
- der Sensor als Distanzsensor (40) zur Detektion der Entfernung zu einem Objekt (60) ausgebildet ist
- und die Sensorvorrichtung (20) dazu ausgebildet ist, ein Signal auszugeben, wenn ein Objekt (60) eine bestimmte Entfernung zum Distanzsensor (40) oder eine bestimmte Linie oder Fläche vor dem Distanzsensor (40) innerhalb des Überwachungsraumes (50) erreicht oder unterschreitet.

2. Sensorvorrichtung nach Anspruch 1, **dadurch gekennzeichnet, dass** der Distanzsensor an einem Ende der ausgewählten Lichtleiste oder Trägers angeordnet ist, um bei senkrechter Montage der Lichtleiste am Durchgang unten zu sein.

3. Sensorvorrichtung nach Anspruch 1 oder 2, **dadurch gekennzeichnet, dass** der Träger und/oder die ausgewählte Leiste mit dem Distanzsensor zur Montage auf einer Schiebetüre, im Bereich der Vorderkante der Schiebetüre oder zur Montage an einer Aufzugstüre vorgesehen ist.

4. Sensorvorrichtung nach Anspruch 1, 2 oder 3, **dadurch gekennzeichnet, dass** der Überwachungsraum des Distanzsensors als zweite Überwachungsebene ausgebildet ist, die senkrecht zur Überwachungsebene des Lichtgitters verläuft, um bei senkrechtem Einbau des Lichtgitters parallel zum Boden zu verlaufen.

5. Sensorvorrichtung nach Anspruch 1, 2 oder 3, **dadurch gekennzeichnet, dass** der Überwachungsraum des Distanzsensors als Strahl entlang einer Strahlachse ausgebildet ist, der von der Überwachungsebene des Lichtgitters weg geneigt ist.

6. Sensorvorrichtung nach Anspruch 5, **dadurch gekennzeichnet, dass** der Distanzsensor einen Sender umfasst, der zum Aussenden des Strahls entlang einer Strahlachse ausgebildet ist.

7. Sensorvorrichtung nach Anspruch 5 oder 6, **dadurch gekennzeichnet, dass** der Strahl des Distanzsensors einen Öffnungswinkel von kleiner 40 °, insbesondere kleiner 20°, insbesondere kleiner 12°, insbesondere kleiner 8°, insbesondere kleiner 4° um die Strahlachse aufweist.

8. Sensorvorrichtung nach Anspruch 5, 6 oder 7, **dadurch gekennzeichnet, dass** die Strahlachse des Distanzsensors im spitzen Winkel gegenüber der Überwachungsebene um die Längsachse der ausgewählten Leiste gedreht angeordnet ist, wobei der Winkel kleiner 90° ist, insbesondere zwischen 20° und 70° ist, vorzugsweise zwischen 40° und 60° ist, besonders bevorzugt etwa 50° ist, um in montiertem Zustand an der Durchgangsöffnung in den Bereich vor oder nach der Durchgangsöffnung zu zeigen.

9. Sensorvorrichtung nach Anspruch 5, 6, 7 oder 8, **dadurch gekennzeichnet, dass** die Strahlachse des Distanzsensors im spitzen Winkel gegenüber der lotrechen Ebene zur Längsachse der ausgewählten Leiste angeordnet ist, welcher kleiner 90° ist, insbesondere kleiner 45° ist, vorzugsweise kleiner 10° ist, besonders bevorzugt kleiner 5° ist oder insbesondere dem halben Öffnungswinkel des Strahls entspricht, um in senkrecht montiertem Zustand der Sensorvorrichtung nach oben zu zeigen.

10. Sensorvorrichtung nach einem der vorhergehenden Ansprüche, **dadurch gekennzeichnet, dass** die Senderleiste und die Empfängerleiste des Lichtgitters zur parallelen Anordnung und/oder zur senkrechten Montage an den gegenüberliegenden Seiten des Durchgangs ausgebildet sind.

11. Sensorvorrichtung nach einem der vorhergehenden Ansprüche, **dadurch gekennzeichnet, dass** die Senderleiste zum Aussenden von parallelen Strahlen senkrecht zur Senderleiste ausgebildet ist.

12. Sensorvorrichtung nach einem der vorhergehenden Ansprüche, **dadurch gekennzeichnet, dass** der Distanzsensor als 3D-Sensor oder als optischer Time-of-flight-Sensor ausgebildet ist mit einem Sender zum Aussenden von Strahlung in den Überwachungsraum und mit einem Empfänger zum Empfang von am Objekt reflektierter Strahlung des Senders.

13. Sensorvorrichtung nach einem der vorhergehenden Ansprüche, **dadurch gekennzeichnet, dass** der Träger aufweist:
- eine Montageeinheit zur Befestigung des Distanzsensors am Träger mit Trennelementen zur optischen Trennung von Sender und Empfänger des Distanzsensors und/oder
- wenigstens eine Abdeckeinheit zur Abdeckung der Lichtleisten auf dem Träger, des Montageelements im Bereich des Senders oder des Montageelements im Bereich des Empfängers und/oder
- wenigstens ein Befestigungselement an Träger, Montageeinheit und Abdeckeinheiten zur einrastbaren oder verschieblichen Befestigung von Montageelement und Abdeckelementen am Träger.

14. Durchgang mit einer Sensorvorrichtung nach einem der vorhergehenden Ansprüche, wobei der Durchgang eine Schiebetüre oder ein Roll- oder Sektionaltor oder eine Aufzugstüre ist.

## Claims

1. Sensor device (20) for safeguarding and/or controlling a passage (11) having a passage opening,
- having a light grid (30) for detecting an object (60) in a monitoring plane (36), having a transmitter strip (31) having transmitter elements (32) for emitting beams (52) into a common plane, such that said plane forms the monitoring plane (36), having a receiver strip (33) having receiver elements (34) for receiving beams (52) from the transmitter strip (31),
- and having a sensor for detecting an object (60) in a monitoring space (50) outside the monitoring plane (36),
**characterized in that**
- a carrier (21) is provided, to which the transmitter strip (31) or the receiver strip (33) as selected strip and the sensor are jointly secured, and
- the sensor is configured as a distance sensor (40) for detecting the distance to an object (60),
- and the sensor device (20) is configured to output a signal if an object (60) reaches or falls below a specific distance with respect to the distance sensor (40) or a specific line or area in front of the distance sensor (40) within the monitoring space (50).

2. Sensor device according to Claim 1, **characterized in that** the distance sensor is arranged at an end of the selected light strip or carrier in order to be at the bottom in the case of perpendicular mounting of the light strip at the passage.

3. Sensor device according to Claim 1 or 2, **characterized in that** the carrier and/or the selected strip with the distance sensor is provided for mounting on a sliding door, in the region of the front edge of the sliding door or for mounting on an elevator door.

4. Sensor device according to Claim 1, 2 or 3, **characterized in that** the monitoring space of the distance sensor is configured as a second monitoring plane extending perpendicularly to the monitoring plane of the light grid in order to extend parallel to the floor in the case of perpendicular installation of the light grid.

5. Sensor device according to Claim 1, 2 or 3, **characterized in that** the monitoring space of the distance sensor is configured as a beam along a beam axis that is inclined away from the monitoring plane of the light grid.

6. Sensor device according to Claim 5, **characterized in that** the distance sensor comprises a transmitter configured for emitting the beam along a beam axis.

7. Sensor device according to Claim 5 or 6, **characterized in that** the beam of the distance sensor has an aperture angle of less than 40°, in particular less than 20°, in particular less than 12°, in particular less than 8°, in particular less than 4°, about the beam axis.

8. Sensor device according to Claim 5, 6 or 7, **characterized in that** the beam axis of the distance sensor is arranged in a manner rotated at an acute angle relative to the monitoring plane about the longitudinal axis of the selected strip, the angle being less than 90°, in particular being between 20° and 70°, preferably being between 40° and 60°, particularly preferably being approximately 50°, in order to point into the region upstream or downstream of the passage opening in the mounted state at the passage opening.

9. Sensor device according to Claim 5, 6, 7 or 8, **characterized in that** the beam axis of the distance sensor is arranged at an acute angle relative to the perpendicular plane with respect to the longitudinal axis of the selected strip, said angle being less than 90°, in particular being less than 45°, preferably being less than 10°, particularly preferably being less than 5°, or corresponding in particular to half the aperture angle of the beam, in order to point upwards in a perpendicularly mounted state of the sensor device.

10. Sensor device according to any of the preceding claims, **characterized in that** the transmitter strip and the receiver strip of the light grid are configured for parallel arrangement and/or for perpendicular mounting at the opposite side of the passage.

11. Sensor device according to any of the preceding claims, **characterized in that** the transmitter strip is configured for emitting parallel beams perpendicularly to the transmitter strip.

12. Sensor device according to any of the preceding claims, **characterized in that** the distance sensor is configured as a 3D sensor or as an optical time-of-flight sensor with a transmitter for emitting radiation into the monitoring space and with a receiver for receiving radiation from the transmitter that has been reflected at the object.

13. Sensor device according to any of the preceding claims, **characterized in that** the carrier has:
- a mounting unit for securing the distance sensor to the carrier with separating elements for optically separating the transmitter and receiver of the distance sensor, and/or
- at least one covering unit for covering the light strips on the carrier, the mounting element in the region of the transmitter or the mounting element in the region of the receiver, and/or
- at least one securing element at the carrier, mounting unit and covering units for latchably or displaceably securing the mounting element and covering elements to the carrier.

14. Passage with a sensor device according to any of the preceding claims, wherein the passage is a sliding door or a roller or sectional door or an elevator door.

## Revendications

1. Dispositif capteur (20) destiné à sécuriser et/ou à commander un passage (11) comprenant une ouverture de passage,
- comprenant une barrière lumineuse (30) destinée à la détection d'un objet (60) dans un plan de surveillance (36), comprenant une rampe d'émetteurs (31) pourvue d'éléments émetteurs (32) destinés à émettre des rayons (52) dans un plan commun, de sorte que ce plan forme le plan de surveillance (36), comprenant une rampe de récepteurs (33) pourvue d'éléments récepteurs (34) destinés à recevoir les rayons (52) de la rampe d'émetteurs (31),
- et comprenant un capteur destiné la détection d'un objet (60) dans un espace de surveillance (50) en-dehors du plan de surveillance (36),
**caractérisé en ce que**
- un élément porteur (21) est présent, auquel sont fixés en commun la rampe d'émetteurs (31) ou la rampe de récepteurs (33), en tant que rampe choisie, ainsi que le capteur et
- le capteur est réalisé sous la forme d'un capteur de distance (40) destiné à la détection de la distance par rapport à un objet (60),
- et le dispositif capteur (20) est configuré pour délivrer un signal lorsqu'un objet (60) atteint ou passe au-dessous d'une distance déterminée par rapport au capteur de distance (40), ou encore une ligne ou une surface déterminée devant le capteur de distance (40) à l'intérieur de l'espace de surveillance (50).

2. Dispositif capteur selon la revendication 1, **caractérisé en ce que** le capteur de distance est disposé à une extrémité de la rampe lumineuse choisie ou de l'élément porteur, de manière à se trouver en bas au niveau du passage dans le cas d'un montage vertical de la rampe lumineuse.

3. Dispositif capteur selon la revendication 1 ou 2, **caractérisé en ce que** l'élément porteur et/ou la rampe choisie pourvue du capteur de distance est prévu pour un montage sur une porte coulissante, dans la zone du bord avant de la porte coulissante, ou pour un montage sur une porte d'ascenseur.

4. Dispositif capteur selon la revendication 1, 2 ou 3, **caractérisé en ce que** l'espace de surveillance du capteur de distance est réalisé sous la forme d'un deuxième plan de surveillance, lequel suit un tracé perpendiculaire au plan de surveillance de la barrière lumineuse afin de suivre un tracé parallèle au sol dans le cas d'une installation verticale de la barrière lumineuse.

5. Dispositif capteur selon la revendication 1, 2 ou 3, **caractérisé en ce que** l'espace de surveillance du capteur de distance est réalisé sous la forme d'un rayon le long d'un axe de rayon, lequel est incliné en s'éloignant du plan de surveillance de la barrière lumineuse.

6. Dispositif capteur selon la revendication 5, **caractérisé en ce que** le capteur de distance comporte un émetteur qui est configuré pour émettre le rayon le long d'un axe de rayon.

7. Dispositif capteur selon la revendication 5 ou 6, **caractérisé en ce que** le rayon du capteur de distance présente un angle d'ouverture inférieur à 40°, notamment inférieur à 20°, en particulier inférieur à 12°, notamment inférieur à 8°, en particulier inférieur à 4° autour de l'axe de rayon.

8. Dispositif capteur selon la revendication 5, 6 ou 7, **caractérisé en ce que** l'axe de rayon du capteur de distance est disposé selon un angle aigu par rapport au plan de surveillance, tourné autour de l'axe longitudinal de la rampe choisie, l'angle étant inférieur à 90°, notamment compris entre 20° et 70°, de préférence compris entre 40° et 60°, particulièrement de préférence approximativement égal à 50°, afin d'être dirigé dans la zone devant ou derrière l'ouverture de passage à l'état monté au niveau de l'ouverture de passage.

9. Dispositif capteur selon la revendication 5, 6, 7 ou 8, **caractérisé en ce que** l'axe de rayon du capteur de distance est disposé selon un angle aigu par rapport au plan perpendiculaire à l'axe longitudinal de la rampe choisie, lequel est inférieur à 90°, notamment inférieur à 45°, de préférence inférieur à 10°, particulièrement de préférence inférieur à 5° ou en particulier correspond à la moitié de l'angle d'ouverture du rayon, afin d'être dirigé vers le haut à l'état monté vertical du dispositif capteur.

10. Dispositif capteur selon l'une des revendications précédentes, **caractérisé en ce que** la rampe d'émetteurs et la rampe de récepteur de la barrière lumineuse sont configurées pour un arrangement en parallèle et/ou pour un montage vertical au niveau des côtés opposés du passage.

11. Dispositif capteur selon l'une des revendications précédentes, **caractérisé en ce que** la rampe d'émetteurs est configurée pour émettre des rayons parallèles perpendiculairement à la rampe d'émetteurs.

12. Dispositif capteur selon l'une des revendications précédentes, **caractérisé en ce que** le capteur de distance est réalisé sous la forme d'un capteur 3D ou sous la forme d'un capteur optique à temps de vol, avec un émetteur destiné à émettre un rayonnement dans l'espace de surveillance et avec un récepteur destiné à recevoir le rayonnement de l'émetteur réfléchi sur l'objet.

13. Dispositif capteur selon l'une des revendications précédentes, **caractérisé en ce que** l'élément porteur possède :
- une unité de montage destinée à fixer le capteur de distance à l'élément porteur avec des éléments de séparation servant à la séparation optique des émetteurs et des récepteurs du capteur de distance et/ou
- au moins une unité de recouvrement destinée à recouvrir les rampes lumineuses sur l'élément porteur, de l'élément de montage dans la zone de l'émetteur ou de l'élément de montage dans la zone du récepteur et/ou
- au moins un élément de fixation au niveau de l'élément porteur, l'unité de montage et les unités de recouvrement servant à une fixation encliquetable ou coulissante de l'élément de montage et des éléments de recouvrement à l'élément porteur.

14. Passage comprenant un dispositif capteur selon l'une des revendications précédentes, le passage étant une porte coulissante ou une porte roulante ou sectionnelle ou une porte d'ascenseur.
